Europäisches Patentamt

European Patent Office

Office européen des brevets

(19)

(11) **EP 1 442 789 A1**

(12) **EUROPEAN PATENT APPLICATION**

(43) Date of publication:
**04.08.2004 Bulletin 2004/32**

(51) Int Cl.⁷: **B01J 19/00**

(21) Application number: **04250456.3**

(22) Date of filing: **28.01.2004**

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** | • **Caren, Michael P.** **Palo Alto, CA 94303 (US)** • **Peck, Bill J.** **Mountain View, CA 94043 (US)** |
| (30) Priority: **31.01.2003 US 355705** | (74) Representative: **Tollett, Ian et al** **Williams Powell** **Morley House** |
| (71) Applicant: **Agilent Technologies, Inc.** **Palo Alto, CA 94306 (US)** | **26-30 Holborn Viaduct** **London EC1A 2BP (GB)** |
| (72) Inventors: • **Leproust, Eric M.** **Campbell, CA 95008 (US)** | |

(54) **Multiple arrays**

(57)    An array unit (15) comprising a substrate surface (11a) carrying multiple chemical arrays (12) each comprising multiple features (16) and each array being surrounded by a surface energy transition (14) (e.g. more hydrophobic) to maintain a separation between separate liquid samples applied to the arrays, and wherein the substrate surface is physically uninterrupted over a continuous region carrying the arrays. Methods of array fabrication and use are further provided.

FIG. 7

Printed by Jouve, 75001 PARIS (FR)

**Description**

The present invention relates to an array unit carrying multiple arrays and to methods of making and using said arrays. In particular it relates to arrays, such as polynucleotide arrays (for example, DNA arrays), which are useful in diagnostic, screening, gene expression analysis, and other applications.

In the following discussion and throughout the present application, while various references are cited no cited reference is admitted to be prior art to the present application.

Chemical arrays, such as polynucleotide or protein arrays (for example, DNA or RNA arrays), are known and are used, for example, as diagnostic or screening tools. Polynucleotide arrays include regions of usually different sequence polynucleotides arranged in a predetermined configuration on a substrate. These regions (sometimes referenced as "features") are positioned at respective locations ("addresses") on the substrate. The arrays, when exposed to a sample, will exhibit an observed binding pattern. This binding pattern can be detected upon reading the array. For example all polynucleotide targets (for example, DNA) in the sample can be labeled with a suitable label (such as a fluorescent compound), and the fluorescence pattern on the array accurately observed following exposure to the sample. Assuming that the different sequence polynucleotides were correctly deposited in accordance with the predetermined configuration, then the observed binding pattern will be indicative of the presence and/or concentration of one or more polynucleotide components of the sample.

Biopolymer arrays can be fabricated by depositing previously obtained biopolymers (such as from synthesis or natural sources) onto a substrate, or by *in situ* synthesis methods. Methods of depositing obtained biopolymers include loading then touching a pin or capillary to a surface, such as described in US 5,807,522 or deposition by firing from a pulse jet such as an inkjet head, such as described in PCT publications WO 95/25116 and WO 98/41531, and elsewhere. Such a deposition method can be regarded as forming each feature by one cycle of attachment (that is, there is only one cycle at each feature during which the previously obtained biopolymer is attached to the substrate). For *in situ* fabrication methods, multiple different reagent droplets are deposited by pulse jet or other means at a given target location in order to form the final feature (hence a probe of the feature is synthesized on the array substrate). The *in situ* fabrication methods include those described in US 5,449,754 for synthesizing peptide arrays, and in US 6,180,351 and WO 98/41531 and the references cited therein for polynucleotides, and may also use pulse jets for depositing reagents. The *in situ* method for fabricating a polynucleotide array typically follows, at each of the multiple different addresses at which features are to be formed, the same conventional iterative sequence used in forming polynucleotides from nucleoside reagents on a support by means of known chemistry. This iterative sequence can be considered as multiple ones of the following attachment cycle at each feature to be formed: (a) coupling an activated selected nucleoside (a monomeric unit) through a phosphite linkage to a functionalized support in the first iteration, or a nucleoside bound to the substrate (i.e. the nucleoside-modified substrate) in subsequent iterations; (b) optionally, blocking unreacted hydroxyl groups on the substrate bound nucleoside (sometimes referenced as "capping"); (c) oxidizing the phosphite linkage of step (a) to form a phosphate linkage; and (d) removing the protecting group ("deprotection") from the now substrate bound nucleoside coupled in step (a), to generate a reactive site for the next cycle of these steps. The coupling can be performed by depositing drops of an activator and phosphoramidite at the specific desired feature locations for the array. A final deprotection step is provided in which nitrogenous bases and phosphate group are simultaneously deprotected by treatment with ammonium hydroxide and/or methylamine under known conditions. Capping, oxidation and deprotection can be accomplished by treating the entire substrate ("flooding") with a layer of the appropriate reagent. The functionalized support (in the first cycle) or deprotected coupled nucleoside (in subsequent cycles) provides a substrate bound moiety with a linking group for forming the phosphite linkage with a next nucleoside to be coupled in step (a). Final deprotection of nucleoside bases can be accomplished using alkaline conditions such as ammonium hydroxide, in another flooding procedure in a known manner. Conventionally, a single pulse jet or other dispenser is assigned to deposit a single monomeric unit.

The foregoing chemistry of the synthesis of polynucleotides is described in detail, for example, in Caruthers, Science 230: 281-285, 1985; Itakura et al., Ann. Rev. Biochem. 53: 323-356; Hunkapillar et al., Nature 310: 105-110, 1984; and in "Synthesis of Oligonucleotide Derivatives in Design and Targeted Reaction of Oligonucleotide Derivatives", CRC Press, Boca Raton, Fla., pages 100 et seq., US 4,458,066, US 4,500,707, US 5,153,319, US 5,869,643, EP 0294196, and elsewhere. The phosphoramidite and phosphite triester approaches are most broadly used, but other approaches include the phosphodiester approach, the phosphotriester approach and the H-phosphonate approach. The substrates are typically functionalized to bond to the first deposited monomer. Suitable techniques for functionalizing substrates with such linking moieties are described, for example, in US 6,258,454 and Southern, E. M., Maskos, U. and Elder, J.K., Genomics, 13, 1007-1017, 1992. In the case of array fabrication, different monomers and activator may be deposited at different addresses on the substrate during any one cycle so that the different features of the completed array will have different desired biopolymer sequences. One or more intermediate further steps may be required in each cycle, such as the conventional oxidation, capping and washing steps in the case of *in situ* fabrication of polynucleotide arrays (again, these steps may be performed in flooding procedure).

Further details of fabricating biopolymer arrays by depositing either previously obtained biopolymers or by the *in situ* method are disclosed in US 6,242,266, US 6,232,072, US 6,180,351, and US 6,171,797. Particularly useful linker compositions and methods are disclosed in U.S. Patents 6,319,674 and 6,444,268. These patents also provide a means by which the surface energy of a substrate can be modified to control deposited drop spread during array fabrication.

In array fabrication, the quantities of polynucleotide available are usually very small and expensive. Additionally, sample quantities available for testing are usually also very small. These conditions require use of arrays with small, closely spaced features. For example, arrays may have several thousand features present. However, in some situations arrays with far fewer features (for example, only one hundred features) are sufficient. Multiple arrays with fewer features can be accommodated on a same substrate and exposed to different samples. To prevent mixing of the different samples in this situation (which could cause misleading results), physical barriers such as gaskets or other means can be erected between the different arrays to block sample liquid applied on one array from coming in contact with sample liquid applied to adjacent arrays. This may require manually assembling such a gasket configuration before liquid sample application, providing the opportunity for accidental array contact or contamination (for example, from a user's fingers contacting the array), leading to the loss of meaningful results from a very expensive array. While separators might be attached to the substrate prior to array fabrication, this can lead to physical interference with the fabrication process (for example, when a deposition head is needed to pass closely over a substrate surface), possible separator detachment during handling, and requires an additional fabrication step.

The present invention recognizes that it would be desirable then to provide multiple arrays on a substrate which can be exposed to different liquid samples (or different portions of the same sample), while providing a means to inhibit contact between the different samples or sample portions which does not require extensive handling and is easy to manufacture.

The present invention then provides an array unit which includes multiple chemical arrays (such as biopolymer or other polymer) arrays on a substrate surface. Each array includes multiple features and each array is surrounded by a surface energy transition to maintain a separation between separate liquid samples applied to the arrays. The substrate surface is physically uninterrupted over a continuous region carrying the arrays.

The present invention further provides a method of fabricating an array unit of the present invention. This method may include depositing drops containing a biopolymer precursor onto the substrate surface at locations at which the features are to be formed, so that the precursor becomes bound to the surface at the location. This can be repeated at each of the locations with a previously bound precursor binding to a next deposited precursor, until the array is fabricated. In this method the regions at which the arrays are formed become less hydrophobic than the inter-array region following the repetitions of foregoing described drop depositing. Also provided by the present invention is an apparatus which can execute a method of fabricating array units according to the present invention, as well as computer program products carrying a computer readable code which when executed by a computer can execute a method of fabrication of the present invention (such as on the foregoing apparatus).

Further provided by the present invention is a method using an array unit which includes multiple biopolymer arrays on a substrate surface, each array includes multiple features and the arrays being separated by a physically uninterrupted inter-array surface region. This method includes applying a separate liquid sample to each array so that multiple separate samples are present on the substrate surface at the same time while remaining separated by the inter-array region. This method can, for example, be applied to an array of the present invention so that the more hydrophobic inter-array region maintains separation between the applied samples.

Another method of the present invention of using an array unit of the present invention, includes reading a code associated with the array unit and retrieving from the code or a file linked to the code, information on the volume of a liquid sample that should be applied to the arrays.

The various aspects of the present invention may provide any one or more of the following or other useful benefits. For example, multiple arrays can be provided on a substrate which can be exposed to different liquid samples (or different portions of the same sample). At the same time contact between the different samples or sample portions can be inhibited in a way which does not require the use of extensive handling and is not difficult to manufacture.

A number of preferred embodiments of the present invention will now be described with reference to the following drawings, in which:

FIG. 1 illustrates an array assembly carrying multiple arrays, such as may be fabricated by methods of the present invention;
FIG. 2 is an enlarged view of a portion of FIG. 1 showing multiple ideal spots or features of an array;
FIG. 3 is an enlarged illustration of a portion of FIG. 2;
FIG. 4 illustrates the drop diameters of different volumes of stationary ("sessile") drops on an array of an array unit of the present invention, as a function of contact angle;
FIG. 5 illustrates the discontinuity in liquid volume versus liquid contact area which results from a surface energy transition due to an array on a unit of the present invention being less hydrophobic than the inter-array region;

FIG. 6 illustrates an apparatus and method of the present invention for using an array unit of the present invention;

FIG. 7 illustrates use of the array units of the present invention; and

FIG. 8 shows an alternative array configuration for array units of the present invention.

To facilitate understanding, the same reference numerals have been used, where practical, to designate the same elements that are common to the figures. Different letters after the same number indicate different members of a generic class (for example, arrays 12a, 12b, 12c may be generically referred to as "arrays 12"). Drawings are not necessarily to scale.

In the present application, unless a contrary intention appears, the following terms refer to the indicated characteristics. A "biopolymer" is a polymer of one or more types of repeating units. Biopolymers are typically found in biological systems and particularly include polysaccharides (such as carbohydrates), and peptides (which term is used to include polypeptides, and proteins whether or not attached to a polysaccharide) and polynucleotides as well as their analogs such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another. A "nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides. For example, a "biopolymer" includes DNA (including cDNA), RNA, oligonucleotides, and PNA and other polynucleotides as described in US 5,948,902 and references cited therein (all of which are incorporated herein by reference), regardless of the source. An "oligonucleotide" generally refers to a nucleotide multimer of about 10 to 100 nucleotides in length, while a "polynucleotide" includes a nucleotide multimer having any number of nucleotides. A "biomonomer" references a single unit, which can be linked with the same or other biomonomers to form a biopolymer (for example, a single amino acid or nucleotide with two linking groups one or both of which may have removable protecting groups). A "biopolymer precursor" are smaller units of a biopolymer which may be chemically bonded end to end to form the biopolymers. Biomonomers are one type of biopolymers precursors, but biopolymer precursors could include two or more linked monomer units. A fluid reference a liquid (for example, a solution of biopolymer or biopolymer precursor).

An "array", unless a contrary intention appears, includes any one, two or three-dimensional arrangement of addressable regions bearing a particular chemical moiety or moieties associated with that region (for example, biopolymers such as polynucleotide of different sequence at different regions). Each region may extend into a third dimension in the case where the substrate is porous while not having any substantial third dimension measurement (thickness) in the case where the substrate is non-porous. An array is "addressable" in that it has multiple regions of different moieties (for example, different polynucleotide sequences) such that a region (a "feature" or "spot" of the array) at a particular predetermined location (an "address") on the array will detect a particular target or class of targets (although a feature may incidentally detect non-targets of that feature). An array feature is generally homogenous and the features typically, but need not be, separated by intervening spaces. In the case of an array, the "target" will be referenced as a moiety in a mobile phase (typically fluid), to be detected by probes ("target probes") which are bound to the substrate at the various regions. However, either of the "target" or "target probes" may be the one which is to be evaluated by the other (thus, either one could be an unknown mixture of polynucleotides to be evaluated by binding with the other). An "array layout" or "array characteristics", are used interchangeably to refer to one or more physical, chemical or biological characteristics of the array, such as feature positioning within an array and array positioning on a substrate, one or more feature dimensions, or some indication of an identity or function (for example, chemical or biological) of a moiety at a given feature location, or how the array should be handled (for example, conditions under which the array is exposed to a sample, or array reading specifications or expected signals or signal ranges from control features on the array following sample exposure). "Hybridizing" and "binding", with respect to polynucleotides, are used interchangeably. "Control features" on the array are those features which are present to provide a check on array or sample performance during use of the array. For example control features may be negative controls (very little or no signal expected after sample exposure) or positive controls (high signal expected after sample exposure).

A "plastic" is any synthetic organic polymer of high molecular weight (for example at least 1,000 grams/mole, or even at least 10,000 or 100,000 grams/mole.

"Flexible" with reference to a substrate or substrate web, references that the substrate can be bent 180 degrees around a roller of less than 1.25 cm in radius. The substrate can be so bent and straightened repeatedly in either direction at least 100 times without failure (for example, cracking) or plastic deformation. This bending must be within the elastic limits of the material. The foregoing test for flexibility is performed at a temperature of 20°C.

A "web" references a long continuous piece of substrate material having a length greater than a width. For example, the web length to width ratio may be at least 5/1, 10/1, 50/1, 100/1, 200/1, or 500/1, or even at least 1000/1.

When one item is indicated as being "remote" from another, this is referenced that the two items are at least in different buildings, and may be at least one mile, ten miles, or at least one hundred miles apart. "Communicating" information references transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data. An array "assembly" may be the array plus only a substrate on which the array is deposited, although the assembly may be in the form of a package which includes other features (such as a housing with a chamber). A "chamber" references an enclosed volume (although a chamber may be accessible through one or more ports). It will also be appreciated that throughout the present application, that words such as "front", "back", "top", "upper", and "lower" are used in a relative sense only. Reference to a singular item, includes the possibility that there are plural of the same items present. "May" refers to optionally. Any recited method can be carried out in the ordered sequence of events as recited, or any other logically possible sequence.

A "pulse jet" is any device which can dispense drops in the formation of an array. Pulse jets operate by delivering a pulse of pressure (such as by a piezoelectric or thermoelectric element) to liquid adjacent an outlet or orifice such that a drop will be dispensed therefrom.

A "linking layer" bound to the surface may, for example, be less than 200 angstroms or even less than 10 angstroms in thickness (or less than 8, 6, or 4 angstroms thick). Such layer may have a polynucleotide, protein, nucleoside or amino acid minimum binding affinity of $10^4$ to $10^6$ units/$\mu^2$. Layer thickness can be evaluated using UV or X-ray elipsometry if desired.

"Physically uninterrupted" in reference to the substrate surface means there are no physical barriers present which can contain liquid to prevent it from spreading beyond that array. Physical barriers are barriers of sufficiently large dimensions to prevent fluid flow between arrays and are distinguished from liquid containment barriers resulting from discontinuities in surface energy due to chemical composition (for example, the interface at a hydrophobic region and a less hydrophobic adjacent region). For example, a physically uninterrupted surface may be one which has no physical barriers such as walls surrounding the arrays which extend above the substrate surface more than 10 micrometers (or more than 5, 2, or 1 micrometers). A "region" on the surface is a contiguous surface portion, that is, connected. A region may have discontinuities within the region (for example, an inter-array region is interconnected but within it there are regions carrying the features which regions are not part of the inter-array region). A "continuous" region is one which is uninterrupted (that is, it extends completely between its outer dimensions). Thus, the continuous region carrying the features is that continuous portion of the substrate carrying the features and everything between them (and thus also includes the inter-feature region). When the continuous region carrying the features is referenced as being physically uninterrupted, then this refers to their being no physical barriers between the outer boundaries of the surface portion within which the arrays lie.

A "group" in relation to a chemical formula, includes both substituted and unsubstituted forms of the group. Substituents may include lower alkyl, halogen, or other substituents which do not substantially interfere with the desired results.

"Lower alkyl group" is an alkyl group with from 1 to 6 C atoms, and may only have any one of 1, 2, 3, or 4 C atoms.

"Surface energy" is as defined in US 6,444,268.

"Contact angle" of a liquid with a surface is the acute angle measured between the edge of a drop of liquid on that surface and the surface. Contact angle measurements are well known and can be obtained by various instruments such as an FTA200 available from First Ten Angstroms, Portsmouth, VA, U.S.A. Surfaces which are more hydrophobic (which have a higher surface energy) will have higher contact angles with water or aqueous liquids than surfaces which are less hydrophobic (for example, a hydrophobic surface may have a water drop contact angle of more than 50 degrees, or even more than 90 degrees). The contact angle of an array (sometimes referenced as the "average contact angle" or "effective contact angle") is the average contact angle of the features of that array and the inter-feature areas. Contact angles are measured with water unless otherwise indicated.

"Linker agent density" or "capping agent density" refers to the number of linker molecules or capping molecules per unit area. Linker agents are counted in determining linker agent density whether or not they are linked to probes or are themselves capped. For capping agent density only capping agents directly attached to the substrate surface are counted in the capping agent density. If different regions on a substrate surface of uniform composition are exposed under the same conditions to a same composition of linking agent which binds to the surface at a same density, the linker agent density in the regions will be considered to be the "same".

"Probe density" is a shorthand way of referring to the number of linker molecules or probe molecules per unit area within a feature. This term then is used interchangeably with, and has the same meaning as "feature probe density". Thus, any inter-feature areas which are essentially devoid of the probe are not taken into consideration in determining a probe density. "Probe density" in a region then, is distinct and independent of feature density (which is the number of features per unit area).

The steps of any method herein may be performed in the recited order, or in any other order that is logically possible. All patents and other references cited in this application, are incorporated into this application by reference except insofar as anything in those patents or references, including definitions, conflicts with anything in the present application (in which case the present application is to prevail).

In array units of the present invention the surface energy transition may be provided by an inter-array surface region between and surrounding regions carrying the arrays, which is more hydrophobic than the peripheries of the surrounded regions. In one arrangement the foregoing peripheries of the surrounded regions are the peripheries of the arrays (that is, the inter-array region abuts the peripheries of the arrays). In one construction, the arrays can accommodate a volume of water up to 1 mL, usually up to 0.4 mL, more usually up to 0.1 mL before encroaching on the inter-array region.. In another configuration features of the array may accommodate a volume of water up to V, where V is given by the formula:

$$V(r, \theta_c) = \frac{1}{3}\pi\left(\frac{r}{\cos(\frac{\pi}{2} - \theta_c)}\right)^{\frac{1}{3}}\left(2 - 3\sin(\frac{\pi}{2} - \theta_c) + \sin(\frac{\pi}{2} - \theta_c)^3\right)$$

in which, $V(r, \theta_c)$ is volume of the resting drop, r is the radius of a circular array or a radius which provides an equivalent area in the case of a non-circular array, and $\theta_c$ is a contact angle of greater than 20 degrees (or greater than 30, 40, 50, or 60 degrees) and may be less than 80 degrees (or less than 70 or 65 degrees). Alternatively, $\theta_c$ may an angle greater than the value mid-way between any one of the foregoing angles and any one of a higher contact angle for the inter-array region as listed below (e.g. mid-way between 80 and 90 degrees).

The features of the arrays may have a contact angle of between less than 20 degrees (or less than 15, 10, or 5 degrees) and have a total feature area of at least 30% of the area of each array (or at least 40%, 50%, 60% or at least 80%). The arrays themselves may have an average contact angle of greater than 20 degrees (or greater than 30, 40, 50 or 60 degrees) and less than 80 degrees (or less than 70 or 65 degrees), while the inter-array region may have a contact angle greater than 80 degrees (or even greater than 90, 95, 100, 105, 110, 115, 120 or 130 degrees). The arrays may be "round" in shape. In this context, "round" is used to simply mean non-triangular and non-rectangular, and can include elliptically shaped arrays. The minimum separation between adjacent arrays may be at least twice the average distance between the features of the arrays, or at least three, four, five, or eight times that average distance. Also, the minimum separation between adjacent arrays may be no more than ten (or nine or five) times the average distance between features of the arrays. The inter-array surface region may include different types of molecules bound to the substrate surface. Also, each feature of the arrays may include molecules of the different types bound to the substrate surface, with only a sub-set of the different types covalently binding a biopolymer to the surface within the feature. For example, the different type of molecules may be the first and second silanes described in US 6,444,268, incorporated herein by reference, while the sub-set in that case would be the second silanes (the first silanes not binding any biopolymers on the array unit).

Arrays need not be uniform (that is, features equally spaced and of the same size) within each array. For example, each array may have an inner region and an outer region surrounding the inner region, each region having multiple features, with the proportion of the outer region area occupied by features being greater than the proportion of the inner region area occupied by features. This outer region can then provide a hydrophilic/hydrophobic boundary between the arrays and the inter-array region. The arrays in the outer region may be of the same composition.

In methods of the present invention using the described arrays, the separate liquid samples (which may be different samples or different portions from the same sample) may be placed over individual arrays and remain separate from one another as already mentioned. In arrays of the present invention, the more hydrophobic inter-array region (versus the less hydrophobic array region) can maintain separation between the applied samples. While one could then additionally provide physical barriers between arrays, there may be no such physical barriers between arrays during the method thereby avoiding possible handling and contamination problems. For the methods, samples may remain in contact with the separate liquid sample applied to that array for at least one hour, at least five hours, or at least 10 hours. For example, in the case of polynucleotide hybridizations the samples may remain in contact with the arrays for about twelve hours at an elevated temperature, as is known for polynucleotide array hybridizations.

In methods of the present invention of making array units, the substrate surface may include a composition bound to the substrate surface both across the inter-array region and also across the region at which arrays are formed, including the feature locations. At least one component of the composition binds the biopolymer precursor to the surface during deposition of the drops containing the precursor. The foregoing composition may include molecules of different types bound to the substrate surface, with only a sub-set of the different types covalently binding a biopolymer to the surface within the feature. For example, a substrate surface could be coated entirely with a hydrophobic mixture of the first and second silanes described in US 6,444,268, and biopolymer features formed on the substrate at the different arrays. During the first cycle of depositing drops containing biopolymer precursor (such as biomonomers), the precursor becomes bound at the feature only through the second silane. After multiple cycles, the feature locations become less hydrophobic resulting in the regions at which the arrays are formed also becoming less hydrophobic than the inter-array region.

Computer program products of the present invention may include a computer readable storage medium having a computer program stored thereon which controls the apparatus to perform a method as described herein. Any computer readable storage medium for any purpose herein may include, for example, an optical or magnetic memory (such as a fixed or portable disk or other device), or a solid state memory.

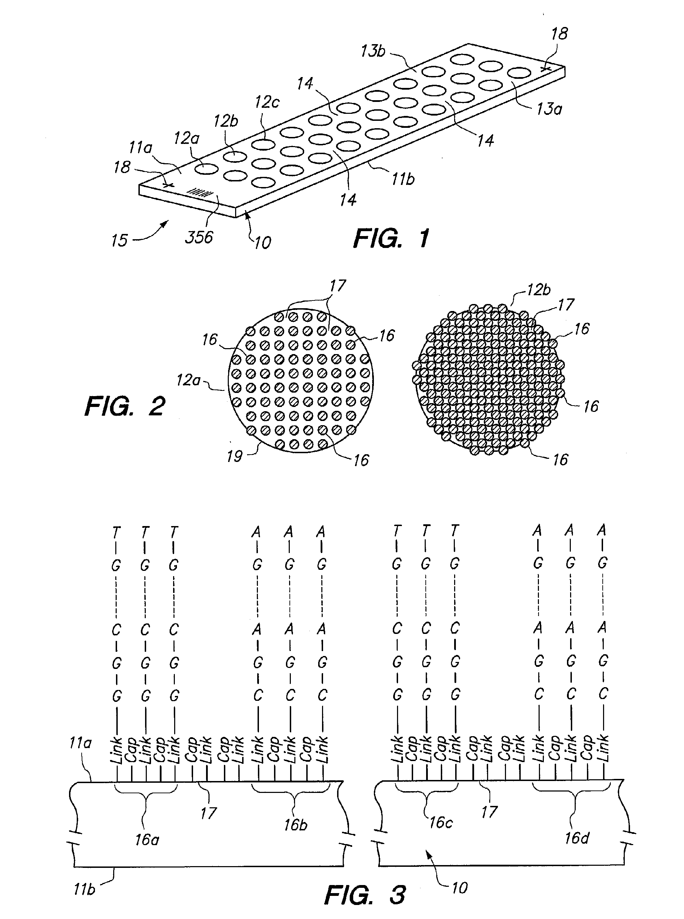

Referring now to FIGS. 1-3, an array assembly 15 of the present invention may include a substrate which can be, for example, in the form of an a rigid substrate 10 (for example, a transparent non-porous material such as glass or silica) of limited length, carrying one or more arrays 12 (such as arrays 12a, 12b, 12c) disposed along a flat front surface 11a of substrate 10 and all separated by a same inter-array surface region 14 which surrounds each of arrays 12. Inter-array surface region can be considered to extend just beyond the outermost of arrays 12 in FIG. 1. The continuous region carrying arrays 12 includes the arrays 12 and inter-array region 14. Alternatively, substrate 10 can be flexible. Each array 12 occupies its own region on surface 11a which is co-extensive with the array (hence the regions do not extend into inter-array region 14). A back side 11b of substrate 10 does not carry any arrays 12. The arrays on substrate 10 can be designed for testing against any type of sample, whether: a trial sample; reference sample; a combination of the foregoing; or a known mixture of polynucleotides, proteins, polysaccharides and the like (in which case the arrays may be composed of features carrying unknown sequences to be evaluated). While thirty arrays 12 are shown in FIG. 1, it will be understood that substrate 10 and the embodiments to be used with it, may use any number of desired arrays 12 such as at least five, ten, thirty, fifty, one hundred, or at least two hundred. Depending upon intended use, any or all of arrays 12 may be the same or different from one another and each will contain multiple spots or features 16 of biopolymers in the form of polynucleotides. In the illustrated embodiment arrays 12 are generally round in shape (although other shapes, such as generally elliptical, are possible).

A typical array 12 may contain from more than five, ten, twenty, thirty, one hundred, or even at least one hundred and fifty features. For example, features may have widths (that is, diameter, for a round spot) in the range from a 10 $\mu$m to 1.0 cm. In other embodiments each feature may have a width in the range of 1.0 $\mu$m to 1.0 mm, usually 5.0 $\mu$m to 500 $\mu$m, and more usually 10 $\mu$m to 200 $\mu$m. Non-round features may have area ranges equivalent to that of circular features with the foregoing width (diameter) ranges. At least some, or all, of the features are of different compositions (for example, when any repeats of each feature of the same composition are excluded, the remaining features may account for at least 5%, 10%, or 20% of the total number of features).

Each array 12 may cover an area of less than 400 mm$^2$, or even less than 200 mm$^2$, 100 mm$^2$, or less than 50 mm$^2$ or 20 mm$^2$. In many embodiments, particularly when substrate 10 is rigid, it may be shaped generally as a rectangular solid (although other shapes are possible), having a length of more than 4 mm and less than 1 m, usually more than 4 mm and less than 600 mm, more usually less than 400 mm; a width of more than 4 mm and less than 1 m, usually less than 500 mm and more usually less than 400 mm; and a thickness of more than 0.01 mm and less than 5.0 mm, usually more than 0.1 mm and less than 2 mm and more usually more than 0.2 and less than 1 mm. When substrate 10 is flexible, it may be of various lengths including at least 1 m, at least 2 m, or at least 5 m (or even at least 10 m). With arrays that are read by detecting fluorescence, the substrate 10 may be of a material that emits low fluorescence upon illumination with the excitation light. Additionally in this situation, the substrate may be relatively transparent to reduce the absorption of the incident illuminating laser light and subsequent heating if the focused laser beam travels too slowly over a region. For example, substrate 10 may transmit at least 20%, or 50% (or even at least 70%, 90%, or 95%), of the illuminating light incident on the front as may be measured across the entire integrated spectrum of such illuminating light or alternatively at 532 nm or 633 nm.

In the case where arrays 12 are formed by the conventional *in situ* or deposition of previously obtained moieties, as described above, by depositing for each feature a droplet of reagent in each cycle such as by using a pulse jet such as an inkjet type head, inter-feature areas 17 will typically be present which do not carry any polynucleotide. It will be appreciated though, that the inter-feature areas 17 could be of various sizes and configurations. Each feature carries a predetermined polynucleotide (which includes the possibility of mixtures of polynucleotides). As per usual, A, C, G, T represent the usual nucleotides. "Link" (see FIG. 3 in particular) represents a linking agent (molecule) covalently bound to the front surface and a first nucleotide, and "Cap" represents a molecule which does not bind to a nucleotide, as further described below.

Substrate 10 also one or more identifiers in the form of bar codes 356. Identifiers such as other optical or magnetic identifiers could be used instead of bar codes 356 which will carry the information discussed below. Each identifier may be associated with each array 12 by being on the same substrate 10 and therefore having a fixed location in relation to bar code 356 from which relative location the identity of each array can be determined. The substrate may further have one or more fiducial marks 18 for alignment purposes during array fabrication and reading.

FIGS. 2 and 3 illustrate ideal features 16 of arrays 12a, 12b where the actual features formed are the same as the target (or "aim") features, with each feature 16 being uniform in shape, size and composition, and the features being regularly spaced. Such an array when fabricated by drop deposition methods, would require all reagent droplets for each feature to be uniform in shape and accurately deposited at the target feature location. In practice, such an ideal result may be difficult to obtain due to fixed and random errors during fabrication. For illustrative purposes array 12a is shown with features 16 spaced in a rectangular arrangement (that is, regular rows and columns) while array 12b has features 16 spaced in a close hexagonal configuration. In practice, generally the same configuration (rectangular or close hexagonal) will be used for all arrays 12 on the same substrate 10.

One or more of the arrays may be duplicated on surface 11a with the same features, with duplicated arrays having the same or different feature probe densities. All features within a same array in this embodiment have the same feature probe density, with probes bound to surface 11a through linker agents identified as "Link" in FIG. 3. A capping agent ("Cap") is also present on each of the features 12a-12d. As to a suitable capping agents this may particularly be any of the first silanes as set out in detail US 6,444,268, while the linking agent may be any of the second silanes therein, and the solvent may be as described in that patent also (for example, toluene). As already mentioned, that patent is incorporated herein by reference, including for example the details of the first and second silanes and solvents used therein. In one embodiment as described in the foregoing patent the first silane has the formula $R^1$-Si $(R^L R^x R^y)$ and the second silane has the formula (before linking to a deposited biomonomer) of $R^2$-(L)$_n$-Si($R^L R^x R^y$) so that binding to the surface provides -Si-$R^1$ groups and -Si-(L)$_n$-$R^2$ groups thereon, wherein the $R^L$, moieties, which may be the same or different, are leaving groups, the $R^x$ and $R^y$ are independently lower alkyl or leaving groups, $R^1$ is a chemically inert moiety that upon binding to the substrate surface lowers the surface energy thereof, n is 0 or 1, L is a linking group, and $R^2$ is a functional group enabling covalent binding of a molecular moiety or a modifiable group that may be converted to such a functional group. Leaving groups in the foregoing may include halogen and alkoxy. Both the first and second silanes bind to the surface through reactive hydrophilic moieties thereon, which are selected from the group consisting of hydroxyl, carboxyl, thiol, amino, and combinations thereof. The foregoing terms and other embodiments of the first and second silanes are further defined in the foregoing patent. The substrate 10 may be processed with the foregoing silane mixture as described in detail in US 6,444,268, to obtain hydroxy terminated second silane groups to which nucleotide phosphoramidites can react for binding to the surface through the second silane (the LINK of FIG. 3). This results in the configuration shown in FIGS 1-3 in which the polynucleotides (or other biopolymer) are bound to substrate surface 11a at features 16 through the LINK molecules. The relative amounts of the first and second silanes can be adjusted to control surface energy (and hence, the degree of hydrophobicity) as also described in detail in US 6,444,268.

As can be seen from FIG. 1, the continuous region of front surface 11a of substrate 10 which includes inter-array surface region 14 and arrays 12, is physically uninterrupted. Thus the arrays 12 and inter-array region 14 themselves are also physically uninterrupted.

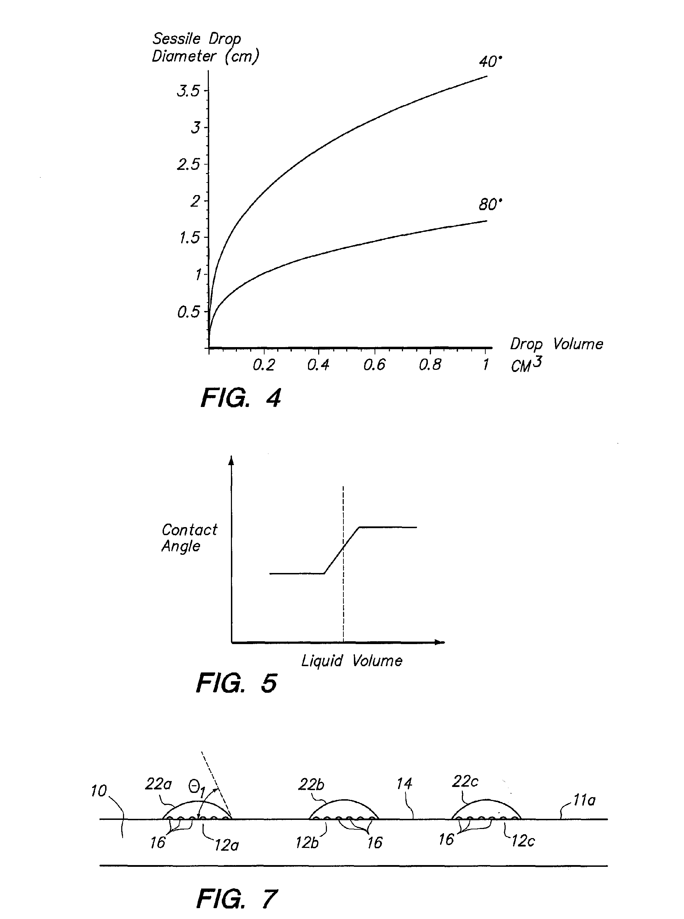

Each feature 16 and hence each array 12 is less hydrophobic than inter-array region 14, as a result of the presence of the polynucleotides (with their hydrophilic functional groups) at each feature 16. Thus, each array 12 is effectively surrounded by a surface energy discontinuity which can maintain separation between separate liquid samples applied to the arrays 12. Regions of greater hydrophobicity have a higher contact angle with an aqueous drop than regions of lower hydrophobicity and therefore a liquid sample applied to each array 12 will tend to be confined to that array. This effect can be observed on the array unit 15 in the manner illustrated in FIG. 5. FIG. 5 generally illustrates contact angle versus drop volume on a surface such as surface 11a. As volume of a drop over an array 12 (which has lower hydrophobicity than inter-array region 14) is increased, as long as the surface contact area of the drop remains within the array the average contact angle of the drop will remain approximately constant at about 20 to 40 degrees (there may be discontinuities between features 16). However, when the drop has expanded to contact the more hydrophobic inter array region 14, contact angle begins to increase (as illustrated around the broken vertical line) and eventually levels off again when the surface contact area of the drop has penetrated into inter-array region 14. In the case illustrated in FIGS. 1-3 and 5, considering the average contact angle of a drop over each array 12, there is in fact a discontinuity in the surface energy and hence that average contact angle, around each array 12.

An array unit 15 of the present invention can be fabricated by first functionalizing all of surface 11a with the first and second silanes in the manner described in US 6,444,268. The arrays 12 can then be fabricated on surface 11a by forming the features 16 using the *in situ* or deposition of previously obtained biopolymer fabrication methods described above. This may be done by depositing onto the continuous functionalized area on the substrate surface, drops containing the biopolymer or other chemical probes or probe precursors (for example, biomonomers such as nucleoside phosphoramidites) at the multiple feature locations of each array on substrate 10 to be fabricated, so that the probes or probe precursors bind to the linking agent at the feature locations. This step may be repeated at one or more features, particularly when the *in situ* method of fabricating biopolymers is used, until the arrays 12 are completed. Such procedures are disclosed in detail in US in, for example, US 6,242,266, US 6,232,072, US 6,180,351, US 6,171,797, US 6,323,043, U.S. Patent Application Serial No. 09/302,898 filed April 30, 1999 by Caren et al., and the references cited therein.

As a result of feature formation as the polynculeotides are extended at each feature location, each feature 16 (and hence each array 12) becomes less hydrophobic than the functionalized inter-feature areas 17. This is a result of the hydrophilic functional groups present in the extending polynucleotide (although other biopolymers with hydrophilic groups, such as peptides, could be used instead). When features 16 are sufficiently closely packed within an array 12, while the inter-feature areas 17 still retain their unreacted first and second silanes, the overall character of the surface at array 12 will become less hydrophobic than inter-array region 14. A simple way to evaluate the feature density needed to obtain this effect, is to construct a number of test arrays with different feature densities of the same compositions as a desired final array on the same functionalized surface as the desired final array (such as a surface 11a functionalized with the first and second silanes as already described). The performance of an aqueous drop (preferably of the same composition of samples to which the actual array will later be exposed) on the test arrays as volume is increased, is then examined. If the behavior illustrated in FIG. 5 is observed, such that drops placed on the test arrays will tend to be confined there providing a maximum volume is not reached where the drop is forced onto the inter-array region, then the density is sufficient. The greater and steeper the rise of the intermediate region of the graph in FIG. 5, the better. Alternatively, other means of measuring resistance to movement of drops beyond arrays 12 can be used.

Array units of the present invention may be fabricated using any of those apparatus described in the following U.S. patents: 6,420,180; 6,323,043; or 6,180,351. The array units 15 are fabricated in accordance with operation methods of the apparatus described in those patents using a substrate 10 which previously has had the entire surface 11a functionalized with the first and second silanes as already described. In particular, the processor of the apparatus controls array fabrication in accordance with the deposition pattern by the *in situ* or deposition methods, to generate the arrays 12 on substrate 10 (which may be cut from a larger substrate). At each target feature 16 during each cycle, a reagent drop set is deposited so that the probe or probe precursors bind to the different regions through the linker agent. For the *in situ* fabrication process, the deposition is repeated for a monomer at each feature during each cycle of the process. The processor also sends the substrate to a flood station for cycle intervening or final steps as required, all in accordance with the conventional *in situ* polynucleotide array fabrication process described above. At any point in the operation of the apparatus the processor may associate each array with an identifier such as a bar code 356 in a manner as described in US 6,180,351. The identifier may carry information on the layout of the arrays 12 on a substrate 10, as well as other information (such information on sample volumes that may be applied to each array 12 of a particular array unit 15, including any one or more of: a recommended sample volume, minimum volume, and maximum volume). Typical maximum volumes which might be applied to each array 12 are no more than 1000 microliters, or no more than: 500, 200, 100, 50, or 10 microliters. Alternatively, the identifier 356 may be linked to a file carrying any of the foregoing information such that the file can be retrieved based on the identifier. The file and linkage to the identifier can be stored by the fabricating apparatus processor into a fixed memory or can be written onto a portable storage medium which is then placed in a same package as the corresponding array assembly 15 for shipping to a remote customer. Other uses for identifier are described in US 6,180,351.

It will be appreciated that an array unit 15 can be fabricated by other means, such as by photolithographic techniques, provided the surface energy transition previously described is provided which surrounds the arrays 12.

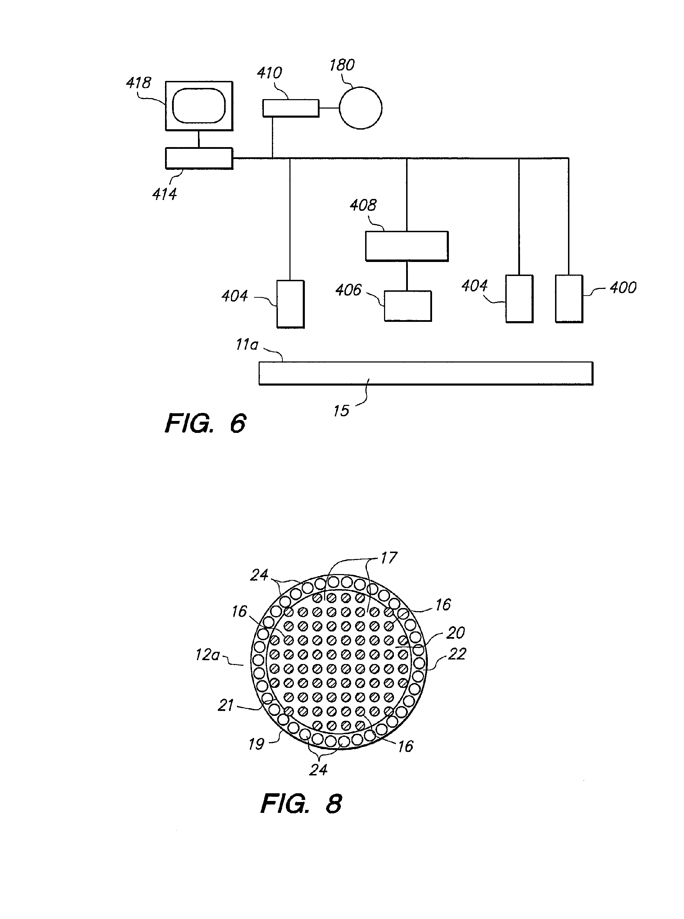

When an array unit 15 is received by a customer it may be exposed to a sample at a user station which may be remote from the array fabrication station, using a manual or automated apparatus. FIG. 6 illustrates an automated apparatus. A processor 414 can receive from a reader 400 any read codes (such as bar code 356) from an array unit 15. Processor 414 also can check the alignment of a substrate unit 15 in relation to a sample dispensing unit 406 using cameras 404 to view fiducial marks 18. Sample dispensing unit 406 may be a pulse jet head similar in construction to head 410 and may be a piezo or a thermal pulse jet head to deliver sample to arrays 12 (in a manner such as described in US 6,221,653). Alternatively, sample dispensing unit 406 may be an automated pipetting system. An x-y translation stage 408 can move head 406 to any position over surface 11a. Processor 414 further has access to a communication channel 180 through communication module 410. Communication channel 180 may be any suitable communication channel such as LAN, WAN, satellite, or telephone network.

In operation an array unit 15 is positioned manually beneath head 406 and processor 414 uses cameras 404 and fiducials 18 to determine the position of array unit 15 in relation to head 408. The code (such as bar code 356) is read by reader 400 and the layout of arrays 12 and information on sample volumes for each array 12 (such as any one or more of recommended volume, minimum volume, or maximum volume), are retrieved. The retrieval can be from the read code itself (when it contains the information), from a local memory into which such information has been previously saved in the form of a file linked to the code, or from a memory at a remote location containing the linked file (such as at the array fabrication facility or elsewhere). Processor 414 can then control head translation stage 408 and head 406 to deposit samples onto each array 12 using the retrieved information, with the deposited volume on each array being the recommended volume, at least the minimum volume, or no more than the maximum volume depending upon which of the foregoing were retrieved.

In a non-automated system for using array unit 15, cameras 404, head 406 and translation stage 408 can be dispensed with. Instead, a user may manually pass code 356 of an array unit 15 beneath reader 400 and processor will retrieve and display the volume information described above on a monitor 418. The user can then manually pipette the volume to be deposited described above, onto arrays 12.

Whether the samples are deposited by the automated or manual techniques described above, separate liquid samples are applied to each array 12 with the sample volume deposited on each array 12 being sufficient to cover that array 12 while not exceeding a maximum volume which can be accommodated on that array without extending into inter-array region 14. As a result the separate liquid samples will be present on the substrate surface 11a at the same time which do not extend beyond the array 12 into the more hydrophobic inter-array region 14. The more hydrophobic inter-array region 14 maintains separation between the applied samples and confines them to the region of their array 12 by inhibiting sample movement into the inter-array region 14 as described above. This situation is illustrated in FIG. 7 wherein deposited separate samples 22a, 22b, 22c are maintained separate and prevented from expanding beyond their respective arrays 12a, 12b, 12c by virtue of more hydrophobic inter-array region 14. Note the contact angle $\theta_1$. The samples 22 may be allowed to remain in contact with each array 12 for at least one hour, four hours, six hours, or at least ten hours. Differences between the average contact angle of an array and the contact angle of the inter-array region may be more than 10, 20, 30, 40, 60, 70 or 80 degrees.

When the probes on features 16 and the sample to be bound by them are both polynucleotides which are to be hybridized, well known array hybridization conditions can be used. During hybridization the array unit 15 can be maintained in a humidified environment (such as an enclosed chamber of small volume) or a component such as a humectant can be added to each sample which will enhance retention of moisture. Humectants include polyethylene glycol (such as polyethylene glycol of an average molecular weight of 500, 1000 or more), triacetin, sorbitol, polydextrose, maltitol, glycerin, or erythritol, as well as other polymers (such as hydrophilic polymers) or molecules which promote retention of moisture. Of course, any such component chosen should otherwise be compatible with the chemistry of the hybridization solution and array. Alternatively, controlled evaporation could be used to decrease sample volume (and increase concentration) during hybridization. In that case one will want to start with an over-stringent buffer since stringency will decrease as volume decreases. Alternatively, the opposite effect could be obtained by adding hybridization buffer during the hybridization.

Note that in any event the amount of sample required is reduced over what would be required if the features of all the arrays were evenly spaced on surface 11a as just one array. This is because a large portion (inter-array region 14) of surface 11a not carrying features is not contacted by the samples. Thus, the required sample volumes can be reduced, or the sample can be used in a more concentrated form to promote hybridization. Furthermore, the relatively hydrophilic region carrying the features still assists in ensuring the sample is spread evenly over the array 12.

Following exposure of the samples to the arrays for a sufficient time they may be washed and dried for reading. Note that all arrays 12 can be washed with the same wash buffer at the same time, thereby reducing process variability and increasing throughput versus having each array on a different substrate.

All arrays 12 on unit 15 can be read at the same time by using any suitable reading apparatus. Where fluorescent light is to be detected due to incorporation of fluorescent labels into the target in a known manner, well known array readers can be used. For example, such a reader may scan one or more illuminating laser beams across each array in raster fashion and any resulting fluorescent signals detected, such as described in US 6,406,849. Note that the present array unit avoids the use of any additional hydrophobic materials such as waxes, or the need for gaskets and the like, all of which can introduce small amount of fluorescent contaminants. Since the read fluorescent signals from each array feature are small, such contaminants even in small concentrations at only certain locations, can seriously affect results.

Results from the array reading can be further processed results, such as obtained by rejecting a reading for a feature which is below a predetermined threshold and/or forming conclusions based on the pattern read from the array (such as whether or not a particular target sequence may have been present in the sample or an organism from which the sample was obtained exhibits a particular condition or disease). The results of the reading (processed or not) can be forwarded (such as by communication) to be received at a remote location for further evaluation and/or processing, or use, using communication channel 180 or reader/writer 186 and medium 190. This data may be transmitted by others as required to reach the remote location, or re-transmitted to elsewhere as desired.

In a variation of the embodiments above, it is possible that each array assembly 15 may be contained with a suitable housing. Such a housing may include a closed chamber accessible through one or more ports normally closed by septa, which carries the substrate 10. In this case, the identifier for all arrays on a substrate 10 can be associated with them by being applied to the housing. It will also be appreciated that arrays may be read by any other method or apparatus than that described above, with other reading methods including other optical techniques (for example, detecting chemiluminescent or electroluminescent labels) or electrical techniques (where each feature is provided with an electrode to detect hybridization at that feature in a manner disclosed in US 6,251,685, US 6,221,583 and elsewhere). As to retrieving signal data from features ("feature extraction") in which features and their corresponding signals are identified in an image of a read array, this can be performed using procedures such as described in U.S. Patent Applications Serial Nos. 09/589046, 09/659415 and 10/086839, all under the title "Method And System For Extracting Data From Surface Array Deposited Features".

In the embodiment illustrated in FIGS. 1-3, a periphery 19 of each region carrying an array 12a (defined by the line just touching the outermost limit of the outermost features 16 of the array 12a) surrounded by inter-array region 14 provides the surface energy transition to maintain a separation between separate liquid samples applied to the arrays. However, this need not be the case. For example, there could be a gap between the array and such surface energy transition where some other composition less hydrophobic than the array 12a is provided in the gap (the surface energy transition then being between that composition and the more hydrophobic inter-array region 14). In another alternative, the array need not be of uniform arrangement. For example, as shown in FIG. 8 array 12a could include an inner region 20 (bounded at 21) and an outer region 22 (also bounded by periphery 19 of array 12a) surrounding the inner region 20. Outer region 22 also has multiple features 24 which could all be the same or different composition (providing they are of a composition more hydrophilic than inter-array region 14). For example, features 24 could be the same sequence polynucleotide. The proportion of the outer region area (defined between boundary 21 and periphery 10) occupied by features 24 is greater than the proportion of the inner region area (bounded by boundary 21) occupied by features 16. As a result, the outer region 22 could actually be more hydrophilic than inner region 20. Note that if outer region 22 was continuously filled with a composition more hydrophilic than inter-array region 14, this would represent an embodiment with a gap between the array and surface energy transition, as previously mentioned. In that case, the periphery of array 12a would be at boundary 21 and 19 would be the surface energy transition. Thus, inter-array region 14 would in this embodiment be more hydrophobic than peripheries 19 of the surrounded regions.

The substrate surface onto which the polynucleotide compositions or other moieties is deposited may be porous or non-porous, and be smooth or substantially planar. The substrate may be of one material or of multi-layer construction. Where a pattern of arrays is desired, any of a variety of geometries may be constructed other than the organized rows and columns of arrays 12 of FIG. 1. For example, arrays 12 can be arranged in a series of curvilinear rows across the substrate surface (for example, a series of concentric circles or semi-circles), and the like. Similarly, the pattern of features 16 within an array 12 may be varied from the organized rows and columns of features in FIG. 2 to include, for example, a series of curvilinear rows (for example, a series of concentric circles or semi-circles of spots), and the like. While various configurations of the features can be used, the user should be provided with some means (for example, through the array identifier) of being able to ascertain at least some characteristics of the features (for example, any one or more of feature composition, location, size, performance characteristics in terms of significance in variations of binding patterns with different samples, or the like). The configuration of the array may be selected according to manufacturing, handling, and use considerations. The present methods and apparatus may be used to fabricate and use arrays of other biopolymers, polymers, or other moieties on surfaces in a manner analogous to those described above. Accordingly, reference to polymers, biopolymers, or polynucleotides or the like, can often be replaced with reference to "chemical moieties".

Various further modifications to the particular embodiments described above are, of course, possible. Accordingly, the present invention is not limited to the particular embodiments described in detail above.

## Claims

1. An array unit 15 comprising a substrate surface 11a carrying multiple biopolymer arrays 12 each comprising multiple features 16 and each array being surrounded by a surface energy transition 14 to maintain a separation between separate liquid samples applied to the arrays, and wherein the substrate surface is physically uninterrupted over a continuous region carrying the arrays.

2. An array unit according to claim 1 wherein the surface energy transition is provided by an inter-array surface region between and surrounding regions carrying the arrays, which is more hydrophobic than peripheries of the surrounded regions.

3. An array unit according to claim 2 wherein the peripheries of the surrounded regions are the peripheries of the arrays.

4. An array unit according to any preceding claim wherein the biopolymers comprise polynucleotides or peptides.

5. An array unit according to any of claims 2 to 4 wherein the inter-array surface region is more hydrophobic than the features of the arrays.

6. An array unit according to claim 5 wherein the array can accommodate a volume of water up to V before encroaching on the inter-array region, where V is given by:

$$V(r,\theta_c) = \frac{1}{3}\pi\left(\frac{r}{\cos(\frac{\pi}{2}-\theta_c)}\right)^{\frac{1}{3}}\left(2 - 3\sin(\tfrac{\pi}{2}-\theta_c) + \sin(\tfrac{\pi}{2}-\theta_c)^3\right)$$

in which, $V(r, \theta_c)$ is volume of the resting drop, r is the radius of a circular array or a radius which provides an equivalent area in the case of a non-circular array, and $\theta_c$ is a contact angle of greater than 20 degrees.

7. An array unit according to any preceding claim wherein the features of the arrays have a contact angle of less than 20 degrees and have a total feature area of at least 30% of the area of each array.

8. An array unit according to any preceding claim wherein the arrays are round.

9. An array unit according to any preceding claim wherein the minimum separation between adjacent arrays is at least twice the average distance between the features of the arrays.

10. An array unit according to any of claims 1 to 8 wherein the minimum separation between adjacent arrays is no more than ten times the average distance between features of the arrays.

11. An array unit according to any preceding claim wherein each array includes between fifty to a thousand features.

12. An array unit according to claim 2 wherein the inter-array surface region includes different types of molecules bound to the substrate surface.

13. An array unit according to claim 12 wherein each feature of the arrays also includes molecules of the different types bound to the substrate surface, with only a sub-set of the different types covalently binding a biopolymer to the surface within the feature.

14. An array unit according to any preceding claim wherein each array comprises an inner region 20 and an outer region 22 surrounding the inner region, each region with multiple features, the proportion of the outer region area occupied by features being greater than the proportion of the inner region area occupied by features.

15. An array unit according to claim 14 wherein the outer region of each array comprises at least eight features.

16. A method of using an array according to claim 2 comprising applying a separate liquid sample to each array so that multiple separate samples are present on the substrate surface at the same time, while the more hydrophobic inter-array region maintains separation between the applied samples.

17. A method according to claim 16 wherein there are no physical barriers between arrays.

18. A method according to claim 16 or 17 wherein the array features comprise polynucleotides or peptides and each sample comprises polynucleotides or peptides.

19. A method of fabricating an array comprising:

(a) depositing drops containing a biopolymer precursor onto a substrate surface 11a at locations at which features 16 are to be formed, so that the precursor becomes bound to the surface at the location; and
(b) repeating (a) at each of the locations with a previously bound precursor binding to a next deposited precursor, until the array is fabricated;

wherein the regions on which the arrays are formed become less hydrophobic than the inter-array region 14 following the repetitions of (a).

20. A method according to claim 29 wherein the substrate surface includes a composition bound to the substrate surface both across the inter-array region and also across the region at which arrays are formed, including the feature locations, at least one component of the composition binding the biopolymer precursor to the surface during (a).

21. A method according to claim 20 wherein the composition comprises molecules of different types bound to the substrate surface, with only a sub-set of the different types covalently binding a biopolymer to the surface within the feature.

22. A method using an array unit 15 comprising multiple biopolymer arrays 12 on a substrate surface 11a, each array comprising multiple features 16 and the arrays being separated by an inter-array surface region 14, wherein the substrate surface is physically uninterrupted over a continuous region carrying the arrays, the method comprising:

applying a separate liquid sample to each array so that multiple separate samples are present on the substrate surface at the same time while remaining separated by the inter-array region.

23. A method of using an array unit according to claim 4 or 22, the method comprising reading a code associated with the array unit and retrieving from the code or a file linked to the code, information on the volume of liquid samples that should be applied to the arrays.

24. A method according to claim 33 wherein the liquid samples are aqueous samples which include a humectant to retain moisture.

FIG. 1

FIG. 2

FIG. 3

FIG. 4

FIG. 5

FIG. 7

FIG. 6

FIG. 8

# EP 1 442 789 A1

**European Patent Office**

## EUROPEAN SEARCH REPORT

Application Number

EP 04 25 0456

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01/62377 A (CHEN ANTHONY C ;CHEN SHIPING (US); GENOSPECTRA INC (US); LUO YULIN) 30 August 2001 (2001-08-30)<br>* abstract *<br>* page 5, line 24 - page 7, line 28 *<br>* page 9, line 20 - page 10, line 6 *<br>* page 13, line 22 - page 14, line 16 *<br>* page 31, line 21 - line 33 *<br>* page 35, line 22 - page 37, line 9; figures *<br>--- | 1-22 | B01J19/00 |
| X | US 5 985 551 A (BRENNAN THOMAS M) 16 November 1999 (1999-11-16)<br>* column 2, line 10 - line 47 *<br>* column 4, line 46 - column 5, line 67; figures; examples *<br>--- | 1-22 | |
| X | DE 196 28 928 A (BASF AG) 22 January 1998 (1998-01-22)<br>* page 2, line 3 - line 9 *<br>* page 2, line 57 - page 3, line 21 *<br>* page 4, line 13 - line 42; figures 1,3 *<br>--- | 1-23 | TECHNICAL FIELDS SEARCHED (Int.Cl.7)<br><br>B01J |
| X | US 5 688 642 A (CALVERT JEFFREY M ET AL) 18 November 1997 (1997-11-18)<br>* abstract *<br>* column 4, line 19 - column 9, line 8; figures; example 7 *<br>--- | 1-22 | |
| X | US 2002/045270 A1 (FRANZEN JOCHEN ET AL) 18 April 2002 (2002-04-18)<br>* abstract *<br>* page 2, paragraph 22 - page 3, paragraph 27 *<br>* page 3, paragraph 32 - paragraph 37 *<br>* page 4, paragraph 46 - paragraph 48 *<br>* page 5, paragraph 59; figure *<br>--- | 1-22 | |

-/--

The present search report has been drawn up for all claims

| Place of search | Date of completion of the search | Examiner |
|---|---|---|
| MUNICH | 17 May 2004 | Nazario, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

**European Patent Office**

## EUROPEAN SEARCH REPORT

Application Number

EP 04 25 0456

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 02/12893 A (MASSACHUSETTS INST TECHNOLOGY) 14 February 2002 (2002-02-14) <br> * abstract * <br> * page 12, line 13 - line 20 * <br> --- | | |
| P,X | EP 1 364 702 A (SAMSUNG ELECTRONICS CO LTD) 26 November 2003 (2003-11-26) <br> * abstract * <br> * page 3, line 13 - page 4, line 36; claims; figures * <br> ----- | 1-22 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 17 May 2004 | Nazario, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                        EP 04 25 0456

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2004

| Patent document cited in search report | | Publication date | Patent family member(s) | | Publication date |
|---|---|---|---|---|---|
| WO 0162377 | A | 30-08-2001 | AU | 4322801 A | 03-09-2001 |
| | | | AU | 6291301 A | 03-09-2001 |
| | | | CA | 2399189 A1 | 30-08-2001 |
| | | | CA | 2400789 A1 | 30-08-2001 |
| | | | CN | 1416365 T | 07-05-2003 |
| | | | CN | 1404415 T | 19-03-2003 |
| | | | EP | 1257354 A2 | 20-11-2002 |
| | | | EP | 1257355 A2 | 20-11-2002 |
| | | | JP | 2003529056 T | 30-09-2003 |
| | | | JP | 2004502923 T | 29-01-2004 |
| | | | WO | 0162377 A2 | 30-08-2001 |
| | | | WO | 0162378 A2 | 30-08-2001 |
| | | | US | 2003143725 A1 | 31-07-2003 |
| | | | US | 2004014102 A1 | 22-01-2004 |
| | | | US | 2002028160 A1 | 07-03-2002 |
| | | | US | 2001055801 A1 | 27-12-2001 |
| | | | US | 2002051979 A1 | 02-05-2002 |
| | | | US | 2001053334 A1 | 20-12-2001 |
| US 5985551 | A | 16-11-1999 | US | 5474796 A | 12-12-1995 |
| | | | US | 6210894 B1 | 03-04-2001 |
| | | | US | 6589726 B1 | 08-07-2003 |
| | | | AT | 156034 T | 15-08-1997 |
| | | | CA | 2163781 A1 | 08-12-1994 |
| | | | DE | 69404657 D1 | 04-09-1997 |
| | | | DE | 69404657 T2 | 18-12-1997 |
| | | | EP | 0703825 A1 | 03-04-1996 |
| | | | JP | 9500568 T | 21-01-1997 |
| | | | WO | 9427719 A1 | 08-12-1994 |
| DE 19628928 | A | 22-01-1998 | DE | 19628928 A1 | 22-01-1998 |
| | | | AU | 737158 B2 | 09-08-2001 |
| | | | AU | 3541997 A | 10-02-1998 |
| | | | BR | 9710473 A | 17-08-1999 |
| | | | CA | 2260807 A1 | 29-01-1998 |
| | | | CZ | 9900157 A3 | 11-08-1999 |
| | | | WO | 9803257 A1 | 29-01-1998 |
| | | | EP | 0948398 A1 | 13-10-1999 |
| | | | IL | 127688 A | 26-08-2001 |
| | | | JP | 2000516705 T | 12-12-2000 |
| | | | NO | 990186 A | 15-01-1999 |
| US 5688642 | A | 18-11-1997 | NONE | | |
| US 2002045270 | A1 | 18-04-2002 | DE | 10043042 A1 | 21-03-2002 |
| | | | GB | 2370114 A ,B | 19-06-2002 |

**ANNEX TO THE EUROPEAN SEARCH REPORT
ON EUROPEAN PATENT APPLICATION NO.**

EP 04 25 0456

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2004

| Patent document cited in search report | | Publication date | Patent family member(s) | | Publication date |
|---|---|---|---|---|---|
| WO 0212893 | A | 14-02-2002 | AU | 7724501 A | 18-02-2002 |
| | | | CA | 2418105 A1 | 14-02-2002 |
| | | | EP | 1307285 A2 | 07-05-2003 |
| | | | JP | 2004506201 T | 26-02-2004 |
| | | | WO | 0212893 A2 | 14-02-2002 |
| | | | US | 2002076727 A1 | 20-06-2002 |
| EP 1364702 | A | 26-11-2003 | CN | 1460723 A | 10-12-2003 |
| | | | EP | 1364702 A2 | 26-11-2003 |
| | | | JP | 2004004076 A | 08-01-2004 |

EPO FORM P0459

For more details about this annex : see Official Journal of the European Patent Office, No. 12/82